# EUROPÄISCHE PATENTSCHRIFT

(11) **EP 2 438 096 B1**
(45) Veröffentlichungstag und Bekanntmachung des Hinweises auf die Patenterteilung: **27.01.2016**
(21) Anmeldenummer: 10722361.2
(22) Anmeldetag: 01.06.2010
(51) Int. Cl.: C08F 220/06, C08F 6/06, C08J 3/00

(54) **VERFAHREN ZUR HERSTELLUNG WASSERABSORBIERENDER POLYMERPARTIKEL**
METHOD FOR PRODUCING WATER-ABSORBING POLYMER PARTICLES
PROCÉDÉ DE PRODUCTION DE PARTICULES DE POLYMÈRE HYDROABSORBANTES

(30) Priorität: 03.06.2009 EP 09161781
(43) Veröffentlichungstag der Anmeldung: 11.04.2012
(73) Patentinhaber: BASF SE, 67056 Ludwigshafen (DE)
(72) Erfinder: STUEVEN, Uwe, 65812 Bad Soden (DE); FUNK, Rüdiger, 65527 Niedernhausen (DE); WEISMANTEL, Matthias, 63637 Jossgrund (DE); VAN ESBROECK, Dominicus, 210019 Nanjing (CN); DE KAEY, Ronny, 2640 Mortsel (BE)
(86) Internationale Anmeldenummer: PCT/EP2010/057611
(87) Internationale Veröffentlichungsnummer: WO 2010/139680

(56) Entgegenhaltungen:
- WO-A1-2008/087114
- DE-A1-102005 014 291

## Beschreibung

Die vorliegende Erfindung betrifft ein Verfahren zur Herstellung wasserabsorbierender Polymerpartikel, wobei ein wässriges Polymergel mittels eines Schwenkbandes auf das Förderband eines Umluftbandtrockners aufgebracht wird.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymerpartikel werden üblicherweise durch Polymerisation geeigneter wässriger Monomerlösungen oder -suspensionen erhalten.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 g/cm² (AUL0.3psi) durchläuft ein Maximum.

Die durch Polymerisation erhaltenen wässrigen Polymergele werden typischerweise mittels eines Umluftbandtrockners getrocknet. Insbesondere bei Umluftbandtrocknern mit breiten Förderbändern ist es schwierig die notwendige gleichmäßige Belegung des Förderbandes mit dem wässrigen Polymergel zu gewährleisten. Zur Lösung dieses Problems werden beispielsweise in Research Disclosure RD 37327 ein spezielles Aufgabesystem und in Research Disclosure RD 37441 die Verwendung von Rechen vorgeschlagen.

Zur Verbesserung der Anwendungseigenschaften, wie beispielsweise Permeabilität des gequollenen Gelbetts (SFC) in der Windel und Absorption unter einem Druck von 49.2 g/cm² (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49,2 g/cm² (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet und thermisch oberflächennachvernetzt. Dazu geeignete Vernetzer sind Verbindungen, die mit mindestens zwei Carboxylatgruppen der wasserabsorbierenden Polymerpartikel kovalente Bindungen bilden können.

Aufgabe der vorliegenden Erfindung war die Bereitstellung eines verbesserten Verfahrens zur Trocknung wässriger Polymergele auf einem Umluftbandtrockner, insbesondere Verfahren, die zu einer gleichmäßigeren Trocknung und zu einer geringeren Produktschädigung führen.

Gelöst wurde die Aufgabe durch ein Verfahren zur Herstellung wasserabsorbierender Polymerpartikel durch Polymerisation einer Monomerlösung oder -suspension, enthaltend
a) mindestens ein ethylenisch ungesättigtes, säuregruppentragendes-Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
umfassend Trocknung des erhaltenen wässrigen Polymergels auf einem Umluftbandtrockner, Mahlung, Klassierung, und optional thermische Oberflächennachvernetzung, dadurch gekennzeichnet, dass das wässrige Polymergel mittels eines Schwenkbandes auf das Förderband des Umluftbandtrockners aufgebracht, das Schwenkband ausgehend von einer Endlage über einen ersten Schwenkwinkel ß₁, wobei ß₁ von 8 bis 24° beträgt, auf eine Winkelgeschwindigkeit v₁ beschleunigt, über einen zweiten Schwenkwinkel ß₂, wobei ß₂ von 10 bis 40° beträgt, auf eine Winkelgeschwindigkeit v₂ abgebremst und über einen dritten Schwenkwinkel ß₃ zur anderen Endlage abgebremst wird, wobei der Quotient aus Winkelgeschwindigkeit v₂ und Winkelgeschwindigkeit v₁ von 0,3 bis 0,9 beträgt, und der Quotient aus Länge des Schwenkbandes und Breite des Förderbands des Umluftbandtrockners von 0,7 bis 1,9 beträgt, wobei die Länge des Schwenkbandes der Abstand der Schwenkachse vom Abwurfende ist.

Der erste Schwenkwinkel ß₁ beträgt vorzugsweise von 9 bis 21°, besonders bevorzugt von 10 bis 18°, ganz besonders von 11 bis 15°. Die Winkelgeschwindigkeit v₁ beträgt vorzugweise 25 bis 40°/s, besonders bevorzugt von 28 bis 37°/s, ganz besonders bevorzugt von 30 bis 35°/s.

Der zweite Schwenkwinkel ß₂ beträgt vorzugsweise von 13 bis 32°, besonders bevorzugt von 16 bis 26°, ganz besonders von 18 bis 22°. Die Winkelgeschwindigkeit v₂ beträgt vorzugweise 10 bis 25°/s, besonders bevorzugt von 13 bis 22°/s, ganz besonders bevorzugt von 15 bis 20°/s.

Der Gesamtschwenkwinkel, d.h. die Summe aus dem ersten, zweiten und dritten Schwenkwinkel beträgt vorzugsweise von 30 bis 70°, besonders bevorzugt von 40 bis 60°, ganz besonders bevorzugt von 45 bis 55°.

Der Quotient aus Winkelgeschwindigkeit v₂ und Winkelgeschwindigkeit v₁ beträgt vorzugsweise von 0,4 bis 0,8, besonders bevorzugt von 0,45 bis 0,7, ganz besonders bevorzugt von 0,5 bis 0,6.

Der Quotient aus Länge des Schwenkbandes und Breite des Förderbandes des Umluftbandtrockners beträgf vorzugsweise von 0,8 bis 1,6, besonders bevorzugt von 0,85 bis 1,4, ganz besonders bevorzugt von 0,95 bis 1,2.

Wird das Schwenkband im Bereich des zweiten Schwenkwinkels ß₂ nicht abgebremst, d.h. v₁ ist gleich v₂, so ist die Polymergelschüttung auf dem Förderband des Umluftbandtrockners an den Rändern zu hoch und in der Mitte zu niedrig. Wird das Schwenkband im Bereich des zweiten Schwenkwinkels ß₂ zu stark abgebremst, d.h. v₁ ist sehr viel größer als v₂, so ist die Polymergelschüttung auf dem Förderband des Umluftbandtrockners an den Rändern zu niedrig und in der Mitte zu hoch.

Der Quotient aus effektiver Breite des Umluftbandtrockners und effektiver Breite des Schwenkbandes beträgt vorzugsweise von 4 bis 12, besonders bevorzugt von 6 bis 10, ganz besonders bevorzugt von 7 bis 9. Eine zu niedrige effektive Breite des Schwenkbandes erschwert eine gleichmäßige Verteilung des wässrigen Polymergels. Die effektive Breite des Umluftbandtrockners bzw. des Schwenkbandes ist die Breite des jeweiligen Förderbandes, die mit wässrigem Polymergel beladen ist.

Die Förderbandgeschwindigkeit des Umluftbandtrockners beträgt vorzugsweise von 0,005 bis 0,05 m/s, besonders bevorzugt von 0,01 bis 0,35 m/s, ganz besonders bevorzugt von 0,015 bis 0,025 m/s.

Vorteilhaft werden die Schwenkbewegung des Schwenkbandes und die Förderbandgeschwindigkeit des Umluftbandtrockners so aufeinander abgestimmt, dass sich das Förderband des Umluftbandtrockners innerhalb eines Doppelhubes des Schwenkbandes um 0,1 bis 0,2 m weiterbewegt, wobei ein Doppelhub die Bewegung des Schwenkbandes von der ersten Endlage zur anderen Endlage und wieder zurück bedeutet.

Die Schwenkachse des Schwenkbandes liegt typischerweise auf der Linie, die das Förderband des Umluftbandtrockners längs in zwei gleiche Hälften teilt.

Das erfindungsgemäße Verfahren ermöglicht auf einfache Weise eine gleichmäßige Trocknung des wässrigen Polymergels und vermeidet eine Produktschädigung. Insbesondere wird eine Verminderung des Vernetzungsgrades und der damit verbundene Anstieg von Zentrifugenretentionskapazität (CRC) und Extrahierbaren vermieden.

Der Wassergehalt des Polymergels vor der Trocknung auf dem Umluftbandtrockner beträgt vorzugsweise von 25 bis 90 Gew.-%, besonders bevorzugt von 35 bis 70 Gew.-%, ganz besonders bevorzugt von 40 bis 60 Gew.-%.

Der Wassergehalt des Polymergels nach der Trocknung auf dem Umluftbandtrockner beträgt vorzugsweise von 0,5 bis 15 Gew.-%, besonders bevorzugt von 1 bis 10 Gew.-%, ganz besonders bevorzugt von 2 bis 8 Gew.-%.

Die Höhe der Polymergelschüttung auf dem Förderband des Umluftbandtrockners beträgt in der Aufgabezone vorzugsweise von 2 bis 20 cm, besonders bevorzug von 5 bis 15 cm, ganz besonders bevorzugt von 8 bis 12 cm.

Der vertikale Abstand von Schwenkband und Förderband des Urnluftbandtrockners, d.h. die Höhe von der das wässrige Polymergel auf das Förderband fällt, beträgt vorzugsweise von 0,1 bis 2 m, besonders bevorzugt von 0,3 bis 1,5 m, ganz besonders bevorzugt von 0,5 bis 1 m. Bei einer zu großen Fallhöhe wird das wässrige Polymergel zu stark verdichtet und lässt sich schlechter durchströmen.

Die Förderbandgeschwindigkeit des Schwenkbandes beträgt vorzugsweise von 0,2 bis 2 m/s, besonders bevorzugt von 0,4 bits 1,5 m/s, ganz besonders bevorzugt von 0, 5 bis 1 m/s.

Das wässrige Polymergel schrumpft während der Trocknung. Dies führt dazu, dass sich das wässrige Polymergel während der Trocknung von den äußersten Randbereichen des Förderbandes zurückzieht. Die Folge davon ist, dass ein Teil des Trocknungsgases an der Polyinergelschüttung vorbeiströmt statt diese zu durchströmen.

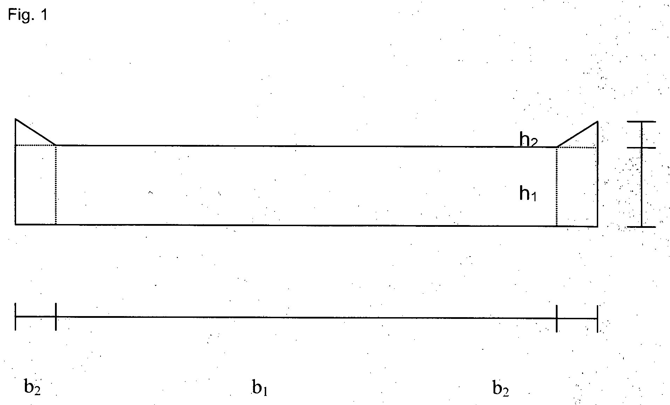

Dieser Schrumpfungseffekt kann durch eine geringfügig höhere Beladung der äußersten Randbereiche des Förderbandes kompensiert werden. Der optimale Querschnitt einer Polymergelschüttung zeigt Figur 1, wobei
b₁ die Breite des mittleren Bereichs,
b₂ die Breite des äußersten Randbereichs,
h₁ die Höhe im mittleren Bereich und
h₂ die Überhöhung am äußersten Rand
bedeutet. Die Breite b₁ des mittleren Bereichs beträgt vorzugsweise von 75 bis 95%, besonders bevorzugt von 80 bis 90%, ganz besonders bevorzugt von 83 bis 87%, der Gesamtbreite des Förderbandes des Umluftbandtrockners. Die Überhöhung h₂ beträgt vorzugsweise 10 bis 40%, besonders bevorzugt von 15 bis 35, ganz besonders bevorzugt von 20 bis 30%, der Höhe h₁.

Der Wassergehalt der Polymergelschüttung in der Aufgabezone beträgt vorzugsweise von 25 bis 90 Gew.-%, besonders bevorzugt von 35 bis 70 Gew.-%, ganz besonders bevorzugt von 40 bis 60 Gew.-%. Die mittlere Partikelgröße des wässrigen Polymergels beträgt vorzugsweise von 0,1 bis 10 mm, besonders bevorzugt von 0,5 bis 5 mm, ganz besonders bevorzugt von 1 bis 2 mm.

Der zur Trocknung verwendete Gasstrom kann Wasserdampf enthalten. Der Wasserdampfanteil sollte aber einen Wert, der einem Taupunkt von vorzugsweise höchstens 50°C, besonders bevorzugt höchstens 40°C, ganz besonders bevorzugt höchstens 30°C, entspricht, nicht übersteigen.

Die Gaseingangstemperaturen des Umluftbandtrockners betragen vorzugsweise von 150 bis 200°C, besonders bevorzugt von 160 bis 190°C, ganz besonders bevorzugt von 170 bis 180°C.

Die Verweilzeit auf dem Umluftbandtrockner beträgt vorzugsweise von 10 bis 120 Minuten, besonders bevorzugt von 20 bis 90 Minuten, ganz besonders bevorzugt von 30 bis 60 Minuten.

Die effektive Breite des Umluftbandtrockners beträgt vorzugsweise von 1 bis 10 m, besonders bevorzugt von 2 bis 7,5 m, ganz besonders bevorzugt von 3 bis 5 m.

Die effektive Länge des Umluftbandtrockners beträgt vorzugsweise von 10 bis 80 m, besonders bevorzugt von 30 bis 60 m, ganz besonders bevorzugt von 40 bis 50 m.

Ein besonders vorteilhaftes Trocknungsverfahren wird in WO 2001/100300 A1 beschrieben.

Im Folgenden wird die Herstellung der wasserabsorbierenden Polymerpartikel näher erläutert:
Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansUlfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di-und/oder Triacrylate des 3- bis 10-flach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm² (AUL0.3psi) durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Moriomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende wässrige Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein wässriges Polymergel, das in einem weiteren Verfahrensschritt zerkleinert werden muss, beispielsweise in einem Extruder oder Kneter.

Zur Verbesserung der Trocknungseigenschaften kann das mittels eines Kneters erhaltene zerkleinerte wässrige Polymergel zusätzlich extrudiert werden.

Die Säuregruppen der erhaltenen wässrigen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden wässrigen Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des wässrigen Polymergels eingestellt wird. Wird das wässrige Polymergel zumindest teilweise nach der Polymerisation neutralisiert, so wird das wässrige Polymergel vorzugsweise mechanisch zerkleinert, beispielsweise mittels eines Extruders, wobei das Neutralisationsmittel aufgesprüht, übergestreut oder aufgegossen und dann sorgfältig unteremischt werden kann. Dazu kann die erhaltene Gelmasse noch mehrmals zur Homogenisierung extrudiert werden.

Das wässrige Polymergel wird dann mit einem Umluftbandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA (European Disposables and Nonwovens Association) empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des wässrigen Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene wässrige Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von höchstens 600 µm, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen erithälten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphösphat und Carboxylat, wie Acetat und Lactat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%; vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl während als auch nach der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die Temperatur der wasserabsorbierenden Polymerpartikel im Trockner beträgt vorzugsweise von 100 bis 250°C, besonders bevorzugt von 130 bis 220°C, ganz besonders bevorzugt von 150 bis 200°C. Die Verweilzeit im Trockner beträgt vorzugsweise von 10 bis 120 Minuten, besonders bevorzugt von 10 bis 90 Minuten, ganz besonders bevorzugt von 30 bis 60 Minuten. Der Füllgrad des Trockners beträgt vorzugsweise von 30 bis 80%, besonders bevorzugt von 40 bis 75%, ganz besonders bevorzugt von 50 bis 70%. Der Füllgrad des Trockners kann über die Höhe des Ablaufwehrs eingestellt werden.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die Nachbefeuchtung wird die mechanische Stabilität der Polymerpartikel erhöht und deren Neigung zur statischen Aufladung vermindert.

Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Feuchtegehalt gemäß der von der EDANA (European Disposables and Nonwovens Association) empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität(CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlenen Testmethode Nr. WSP 241.2-05 "Centrifuge Retention Capacity" bestimmt.

Die wasserabsorbierenden Polymerpartikel werden mittels der nachfolgend beschriebenen Testmethoden geprüft.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

### Zentrifugenretentionskapazität (Centrifuge Retention Capacity)

Die Zentrifugenretentionskapazität (CRC) wird gemäß der von der EDANA empfohlenen Testmethode Nr. WSP 241.2-05 "Centrifuge Retention Capacity" bestimmt.

### Extrahierbare (Extractable)

Die Extrahierbaren werden gemäß der von der EDANA empfohlenen Testmethode Nr. WSP 270.2-05 "Extractable" bestimmt.

Die EDANA-Testmethoden sind beispielsweise erhältlich bei der EDANA, Avenue Eugène Plasky 157, B-1030 Brüssel, Belgien.

### Beispiele

### Beispiel 1

Durch kontinuierliches Mischen von entionisiertem Wasser, 50 gew.-%iger Natronlauge und Acrylsäure wurde eine Acrylsäure/Natriumacrylatlösung hergestellt, so dass der Neutralisationsgrad 71,3 mol-% entsprach. Der Feststoffgehalt der Monomerlösung betrug 38,8 Gew.-%.

Als mehrfach ethylenisch ungesättigter Vernetzer wurde Polyethylenglykol-400-diacrylat (Diacrylat ausgehend von einem Polyethylenglykol mit einem mittleren, Molgewicht von 400 g/mol) verwendet. Die Einsatzmenge betrug 2 kg Vernetzer pro t Monomerlösung.

Zur Initiierung der radikalischen Polymerisation wurden pro t Monomerlösung 1,03 kg einer 0,25gew.-%igen wässriger Wasserstoffperoxidlösung, 3,10 kg einer 15 gew.-%igen wässrigen Natriumperoxodisulfatlösung und 1,05 kg einer 1gew.-%igen wässrigen Ascorbinsäurelösung eingesetzt.

Der Durchsatz der Monomerlösung betrug 20 t/h. Die Reaktionslösung hatte am Zulauf eine Temperatur von 23,5°C.

Die einzelnen Komponenten wurden in folgenden Mengen kontinuierlich in einen Reaktor vom Typ List Contikneter mit einem Volumen 6,3m³ (LIST AG, Arisdorf, CH) dosiert:

| | |
|---|---|
| 20 t/h | Monomerlösung |
| 40 kg/h | Polyethylenglykol-400-diacrylat |
| 82,6 kg/h | Wasserstoffperoxidlösung/Natriumperoxodisulfatlösung |
| 21 kg/h | Ascorbinsäurelösung |

Zwischen dem Zugabepunkt für den Vernetzer und den Zugabestellen für die Initiatoren wurde die Monomerlösung mit Stickstoff inertisiert.

Es fand nach ca. 50% der Verweilzeit zusätzlich eine Zudosierung von aus dem Herstellungsprozeß durch Mahlung und Siebung anfallendem Feinkorn (1000 kg/h) in den Reaktor statt. Die Verweilzeit der Reaktionsmischung im Reaktor betrug 15 Minuten.

Das erhaltene wässrige Polymergel wurde mittels eines Schwenkbandes auf einen Umluftbandtrockner aufgegeben.

Der Umluftbandtrockner hatte eine effektive Länge von 48 m. Das Förderband des Umluftbandtrockners hatte eine effektive Breite von 4,4 m. Die Geschwindigkeit des Förderbandes des Umluftbandtrockners betrug 0,022 m/s.

Das Schwenkband hatte eine Länge von 5 m. Das Förderband des Schwenkbandes hatte eine Breite von 0,8 m und eine effektive Breite von 0,5 m. Das Förderband des Schwenkbandes war an den Rändern um ca. 20° nach oben gewölbt. Der Böschungswinkel des wässrigen Polymergels auf dem Förderband des Schwenkbandes betrug ca. 15°. Der Querschnitt der Polymergelschüttung auf dem Förderband des Schwenkbandes betrug ca. 0,04 m². Die Geschwindigkeit des Förderbandes des Schwenkbandes betrug 0,5 m/s.

Das Schwenkband wurde ausgehend von einer Endlage über einen ersten Schwenkwinkel ß₁ von 13° auf eine Winkelgeschwindigkeit von 33°/s beschleunigt, über einen zweiten Schwenkwinkel ß₂ von 20° auf eine Winkelgeschwindigkeit von 17°/s abgebremst und über einen dritten Schwenkwinkel ß₃ zur anderen Endlage abgebremst. Der Gesamtschwenkwinkel betrug 50°. Ein Doppelhub (von der ersten Endlage zur anderen Endlage und wieder zurück) dauerte ca. 7 s.

Die Höhe der Polymergelschüttung auf dem Förderband des Umluftbandtrockners wurde mit einem Absolute® Digimatic Einbaumessschieber (Mitutoyo Messgeräte GmbH, Neuss, DE) bestimmt. Die Polymergelschüttung auf dem Förderband des Umluftbandtrockneres wies ein Profil gemäß Abbildung 1 auf, wobei die Höhe h₁ ca. 10 cm, die Höhe h₂ ca. 2,5 cm, die Breite b₁ ca. 376 cm und die Breite b₂ ca. 32 cm betrug.

Auf dem Umluftbandtrockner wurde das wässrige Polymergel kontinuierlich mit einem Luft/Gasgemisch umströmt und getrocknet. Die Verweilzeit im Umluftbandtrockner betrug 37 Minuten.

Das getrocknete Polymergel wurde gemahlen und auf eine Partikelgrößenfraktion von 150 bis 850 µm abgesiebt.

Die erhaltenen wasserabsorbierenden Polymerpartikel wiesen eine Zentrifugenretentionskapazität (CRC) von 34,9 g/g und einen Gehalt an Extrahierbaren von 8,5 Gew.-% auf.

### Beispiel 2 (Vergleichsbeispiel)

Es wurde verfahren wie unter Beispiel 1. Das Schwenkband wurde ausgehend von einer Endlage über einen ersten Schenkwinkel ß₁ von 13° auf eine Winkelgeschwindigkeit von 24°/s beschleunigt, über einen zweiten Schwenkwinkel ß₂ von 20° konstant auf einer Winkelgeschwindigkeit von 24°/s gehalten und über einen dritten Schwenkwinkel ß₃ zur anderen Endlage abgebremst. Der Gesamtschwenkwinkel betrug 50°.

Die erhaltenen wasserabsorbierenden Polymerpartikel wiesen eine Zentrifugenretentionskapazität (CRC) von 44,9 g/g und einen Gehalt an Extrahierbaren von 17,4 Gew.-% auf.

### Beispiel 3 (Vergleichsbeispiel)

Es wurde verfahren wie unter Beispiel 1. Das Schwenkband wurde ausgehend von einer Endlage über einen ersten Schwenkwinkel ß₁ von 13° auf eine Winkelgeschwindigkeit von 24°/s beschleunigt, über einen zweiten Schwenkwinkel ß₂ von 20° auf eine Winkelgeschwindigkeit von 22°/s abgebremst und über einen dritten Schwenkwinkel ß₃ zur anderen Endlage abgebremst. Der Gesamtschwenkwinkel betrug 50°.

Die erhaltenen wasserabsorbierenden Polymerpartikel wiesen eine Zentrifugenretentionskapazität (CRC) von 40,7 g/g und einen Gehalt an Extrahierbaren von 8,7 Gew.-% auf.

### Beispiel 4 (Vergleichsbeispiel)

Es wurde verfahren wie unter Beispiel 1. Das Schwenkband wurde ausgehend von einer Endlage über einen ersten Schwenkwinkel ß₁ von 13° auf eine Winkelgeschwindigkeit von 40°/s beschleunigt, über einen zweiten Schwenkwinkel ß₂ von 20° auf eine Winkelgeschwindigkeit von 15°/s abgebremst und über einen dritten Schwenkwinkel ß₃ von zur anderen Endlage abgebremst. Der Gesamtschwenkwirikel betrug 50°.

Während der Trocknung auf dem Förderband des Umluftbandtrockners schrumpfte das wässrige Polymergel, so dass die Ränder des Förderbandes nicht mehr bedeckt waren.

## Patentansprüche

1. Verfahren zur Herstellung wasserabsorbierender Polymerpartikel durch Polymerisation einer wässrigen Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
umfassend Trocknung des erhaltenen wässrigen Polymergels auf einem Umluftbandtrockner, Mahlung, Klassierung, und optional thermische Oberflächennachvernetzung, **dadurch gekennzeichnet, dass** das wässrige Polymergel mittels eines Schwenkbandes auf das Förderband des Umluftbandtrocknersaufgebracht, das Schwenkband ausgehend von einer Endlage über einen ersten Schwenkwinkel ß₁, wobei ß₁ von 8 bis 24° beträgt, auf eine Winkelgeschwindigkeit v₁ beschleunigt, über einen zweiten Schwenkwinkel ß₂, wobei ß₂ von 10 bis 40° beträgt, auf eine Winkelgeschwindigkeit v₂ abgebremst und über einen dritten Schwenkwinkel ß₃ zur anderen Endlage abgebremst wird, wobei der Quotient aus Winkelgeschwindigkeit v₂ und Winkelgeschwindigkeit v₁ von 0,3 bis 0,9 beträgt, und der Quotient aus Länge des Schwenkbandes und Breite des Förderbandes des Umluftbandtrockners von 0,7 bis 1,9 beträgt, wobei die Länge des Schwenkbandes der Abstand der Schwenkachse vom Abwurfende ist.

2. Verfahren gemäß Anspruch 1, **dadurch gekennzeichnet, dass** der Gesamtschwenkwinkel von 30 bis 70° beträgt.

3. Verfahren gemäß Anspruch 1 oder 2, **dadurch gekennzeichnet, dass** die Winkelgeschwindigkeit v₁ von 25 bis 40°/s beträgt.

4. Verfahren gemäß einem der Ansprüche 1 bis 3, **dadurch gekennzeichnet, dass** der Quotient aus effektiver Breite des Umluftbandtrockners und effektiver Breite des Schwenkbandes von 4 bis 12 beträgt.

5. Verfahren gemäß einem der Ansprüche 1 bis 4, **dadurch gekennzeichnet, dass** die Förderbandgeschwindigkeit des Umluftbandtrockners von 0,005 bis 0,05 m/s beträgt.

6. Verfahren gemäß einem der Ansprüche 1 bis 5, **dadurch gekennzeichnet, dass** der Wassergehalt des Polymergels vor der Trocknung auf dem Umluftbandtrockner von 30 bis 70 Gew.-% beträgt.

7. Verfahren gemäß einem der Ansprüche 1 bis 6, **dadurch gekennzeichnet, dass** der Wassergehalt des Polymergels nach der Trocknung auf dem Umluftbandtrockner von 0,5 bis 15 Gew.-% beträgt.

8. Verfahren gemäß einem der Ansprüche 1 bis 7, **dadurch gekennzeichnet, dass** die Höhe der Polymergelschüttung auf dem Förderband des Umluftbandtrockners von 2 bis 20 cm beträgt.

9. Verfahren gemäß einem der Ansprüche 1 bis 8, **dadurch gekennzeichnet, dass** das zu trocknende wässrige Polymergel aus eine Höhe von 0,1 bis 2 m auf das Förderband des Umluftbandtrockners fällt.

10. Verfahren gemäß einem der Ansprüche 1 bis 9, **dadurch gekennzeichnet, dass** die wasserabsorbierenden Polymerpartikel eine Zentrifugenretentionskapazität von mindestens 15 g/g aufweisen.

11. Wässrige Polymergelschüttung auf dem Förderband eines Umluftbandtrockners, wobei die Polymergelschüttung auf dem Förderband des Umluftbandtrockners im mittleren Bereich eine konstante Höhe aufweist, der mittlere Bereich des Förderbandes von 75 bis 95% der Förderbandbreite beträgt und die Höhe der Polymergelschüttung zu den Rändern des Förderbandes um 10 bis 40% ansteigt.

12. Polymergelschüttung gemäß Anspruch 11, wobei der der Wassergehalt des Polymergels von 25 bis 90 Gew.-% beträgt.

## Claims

1. A process for producing water-absorbing polymer particles by polymerizing an aqueous monomer solution or suspension comprising
a) at least one ethylenically unsaturated monomer which bears acid groups and may be at least partly neutralized,
b) at least one crosslinker,
c) at least one initiator,
d) optionally one or more ethylenically unsaturated monomers copolymerizable with the monomers mentioned under a) und
e) optionally one or more water-soluble polymers,
comprising drying of the resulting aqueous polymer gel on a forced-air belt drier, grinding, classifying and optionally thermal surface postcrosslinking, wherein the aqueous polymer gel is applied by means of a swivel belt to the conveyor belt of the forced-air belt drier, the swivel belt, proceeding from one end position, is accelerated through a first pivot angle β₁ where β₁ is from 8 to 24° to an angular speed v₁, decelerated through a second pivot angle β₂ where β₂ is from 10 to 40° to an angular speed v₂ and decelerated through a third pivot angle β₃ to the other end position, the quotient of angular speed v₂ and angular speed v₁ being from 0.3 to 0.9, and the quotient of length of the swivel belt and width of the conveyor belt of the forced-air belt drier being 0.7 to 1.9, the length of the swivel belt being the distance of the pivot axis from the discharge end.

2. The process according to claim 1, wherein the total pivot angle is from 30 to 70°.

3. The process according to claim 1 or 2, wherein the angular speed v₁ is from 25 to 40°/s.

4. The process according to any of claims 1 to 3, wherein the quotient of effective width of the forced-air belt drier and effective width of the swivel belt is from 4 to 12.

5. The process according to any of claims 1 to 4, wherein the conveyor belt speed of the forced-air belt drier is from 0.005 to 0.05 m/s.

6. The process according to any of claims 1 to 5, wherein the water content of the polymer gel before the drying on the forced-air belt drier is from 30 to 70% by weight.

7. The process according to any of claims 1 to 6, wherein the water content of the polymer gel after the drying on the forced-air belt drier is from 0.5 to 15% by weight.

8. The process according to any of claims 1 to 7, wherein the height of the polymer gel bed on the conveyor belt of the forced-air belt drier is from 2 to 20 cm.

9. The process according to any of claims 1 to 8, wherein the aqueous polymer gel to be dried falls from a height of 0.1 to 2 m onto the conveyor belt of the forced-air belt drier.

10. The process according to any of claims 1 to 9, wherein the water-absorbing polymer particles have a centrifuge retention capacity of at least 15 g/g.

11. An aqueous polymer gel bed on the conveyor belt of a forced-air belt drier, said polymer gel bed on the conveyor belt of the forced-air belt drier having a constant height in the middle region, the middle region of the conveyor belt being from 75 to 95% of the conveyor belt width and the height of the polymer gel bed toward the edges of the conveyor belt rises by 10 to 40%.

12. A polymer gel bed according to claim 11, wherein the water content of the polymer gel is from 25 to 90% by weight.

## Revendications

1. Procédé pour la préparation de particules polymères absorbant l'eau par polymérisation d'une solution ou d'une suspension aqueuse de monomères, contenant
a) au moins un monomère éthyléniquement insaturé, portant des groupes acides, qui peut être au moins partiellement neutralisé,
b) au moins un réticulant,
c) au moins un initiateur,
d) éventuellement un ou plusieurs monomères éthyléniquement insaturés copolymérisables avec les monomères cités en a) et
e) éventuellement un ou plusieurs polymères solubles dans l'eau,
comprenant le séchage du gel polymère aqueux obtenu sur un séchoir à bandes à circulation d'air, le broyage, la classification et éventuellement la postréticulation thermique en surface, **caractérisé en ce que** le gel polymère aqueux est appliqué au moyen d'un convoyeur pivotant sur la bande transporteuse du séchoir à bandes à circulation d'air, le convoyeur pivotant est accéléré, partant d'une première position d'extrémité, sur un premier angle pivotant ß₁, ß₁ valant 8 à 24°, à une vitesse angulaire v₁, freiné sur un deuxième angle pivotant ß₂, ß₂ valant 10 à 40°, à une vitesse angulaire v₂ et freiné sur un troisième angle pivotant ß₃ vers l'autre position d'extrémité, le quotient de la vitesse angulaire v₂ et de la vitesse angulaire v₁ valant 0,3 à 0,9 et le quotient de la longueur du convoyeur pivotant et de la largeur de la bande transporteuse du séchoir à bandes à circulation d'air valant 0,7 à 1,9, la longueur du convoyeur pivotant étant la distance entre l'axe de pivotement et l'extrémité de déversement.

2. Procédé selon la revendication 1, **caractérisé en ce que** l'angle de pivotement total est de 30 à 70°.

3. Procédé selon la revendication 1 ou 2, **caractérisé en ce que** la vitesse angulaire v₁ est de 25 à 40°/s.

4. Procédé selon l'une quelconque des revendications 1 à 3, **caractérisé en ce que** le quotient de la largeur effective du séchoir à bandes à circulation d'air et de la largeur effective du convoyeur pivotant vaut 4 à 12.

5. Procédé selon l'une quelconque des revendications 1 à 4, **caractérisé en ce que** la vitesse de la bande transporteuse du séchoir à bandes à circulation d'air est de 0,005 à 0,05 m/s.

6. Procédé selon l'une quelconque des revendications 1 à 5, **caractérisé en ce que** la teneur en eau du gel polymère, avant le séchage sur le séchoir à bandes à circulation d'air, est de 30 à 70% en poids.

7. Procédé selon l'une quelconque des revendications 1 à 6, **caractérisé en ce que** la teneur en eau du gel polymère, après le séchage sur le séchoir à bandes à circulation d'air, est de 0,5 à 15% en poids.

8. Procédé selon l'une quelconque des revendications 1 à 7, **caractérisé en ce que** la hauteur du matériau en vrac de gel polymère sur la bande transporteuse du séchoir à bandes à circulation d'air est de 2 à 20 cm.

9. Procédé selon l'une quelconque des revendications 1 à 8, **caractérisé en ce que** le gel polymère aqueux à sécher tombe d'une hauteur de 0,1 à 2 m sur la bande transporteuse du séchoir à bandes à circulation d'air.

10. Procédé selon l'une quelconque des revendications 1 à 9, **caractérisé en ce que** les particules polymères absorbant l'eau présentent une capacité de rétention dans une centrifugeuse d'au moins 15 g/g.

11. Matériau en vrac aqueux de gel polymère sur la bande transporteuse d'un séchoir à bandes à circulation d'air, le matériau en vrac de gel polymère sur la bande transporteuse du séchoir à bandes à circulation d'air présentant, dans la zone centrale, une hauteur constante, la zone centrale de la bande transporteuse représentant 75 à 95% de la largeur de la bande transporteuse et la hauteur du matériau en vrac de gel polymère augmentant de 10 à 40% vers les bords de la bande transporteuse.

12. Matériau en vrac de gel polymère selon la revendication 11, la teneur en eau du gel polymère valant 25 à 90% en poids.
